# EUROPEAN PATENT APPLICATION

(11) **EP 3 339 254 A1**
(43) Date of publication of application: **27.06.2018**
(21) Application number: 17165354.6
(22) Date of filing: 06.04.2017
(51) Int. Cl.: C02F 3/30

(54) **WASTEWATER TREATMENT APPARATUS AND WASTEWATER TREATMENT METHOD**

(30) Priority: 22.12.2016 JP 2016250080
(71) Applicant: Hitachi, Ltd., Tokyo 100-8280 (JP)
(72) Inventor: YOSHIKAWA, Shinichi, Tokyo, 100-8280 (JP); KIMURA, Yuya, Tokyo, 100-8280 (JP); MIYAMAE, Shoko, Tokyo, 100-8280 (JP)
(74) Representative: Beetz & Partner mbB

(57) **Abstract**

An object of the present invention is to provide a wastewater treatment apparatus and a wastewater treatment method, in which denitrification process by anaerobic ammonium oxidation method can be stably performed at low cost. The wastewater treatment apparatus 1 includes an ammonium oxidation tank 100 in which ammonium nitrogen contained in wastewater is oxidized by microbial sludge or microorganism and a heating tank 120 in which the microbial sludge withdrawn from the ammonium oxidation tank 100 is subjected to heat treatment. A wastewater treatment method is to heat the microbial sludge withdrawn from the ammonium oxidation tank 100 by using heat supplied from a digestion tank 50 in which waste sludge is digested by anaerobic microorganisms or from a heat source 80 for heating the waste sludge to be digested in the digestion tank 50, and to return the microbial sludge, in which activity of nitrite oxidizing bacteria is reduced by the heat treatment, to the ammonium oxidation tank 100, so that the ammonium nitrogen contained in the wastewater is oxidized to nitrite nitrogen.

## Description

### [Technical Field]

The present invention relates to a wastewater treatment apparatus and a wastewater treatment method, and more particularly to a wastewater treatment apparatus and a wastewater treatment method for partially nitrifying ammonium nitrogen to nitrite and denitrifying wastewater by anaerobic ammonium oxidation process.

### [Background Art]

Nitrogen-containing wastewater causes eutrophication in a closed water area and is a cause of water pollution. Therefore, advanced treatment for decomposing and removing nitrogen components contained in the nitrogen-containing wastewater by using microorganisms is performed in some sewage treatment plants.

Conventionally, as a method for biologically denitrifying the nitrogen-containing wastewater, nitrification-denitrification process combining nitrification process and denitrification process has been widely used. In the nitrification-denitrification process, ammonium nitrogen contained in the wastewater is oxidized to nitrate nitrogen by nitrifying bacteria, and then the nitrate nitrogen is converted to nitrogen gas by denitrifying bacteria so that the nitrogen components in the nitrogen-containing wastewater is removed.

On the other hand, in recent years, practical application of anaerobic ammonium oxidation method has also been advanced. Anaerobic ammonium oxidation reaction is a reaction of co-denitrifying ammonia and nitrous acid under anaerobic conditions, and is expressed by the following equation (1).

1.00NH₄⁺ + 1.32NO₂⁻ + 0.066HCO₃⁻ + 0.13H⁺ → 1.02N₂ + 0.26NO₃⁻ + 0.066CH₂O_{0.5}N_{0.15} + 2.03H₂O --- (1)

Since the anaerobic ammonium oxidation reaction is a reaction in which ammonia is used as a hydrogen donor by autotrophic anaerobic ammonium oxidizing bacteria, there is an advantage that there is no need to supply carbon sources such as methanol and operation cost is reduced. Further, since it is not necessary to oxidize nitrite nitrogen to nitrate nitrogen, power cost associated with aeration is also reduced. Furthermore, since the anaerobic ammonium oxidizing bacteria have a high denitrification rate and a low growth rate, it is possible to maintain treatment efficiency to reduce facility scale, and there is also an advantage that an amount of excess sludge is reduced.

The nitrogen-containing wastewater generally contains ammonium nitrogen as a nitrogen component in many cases. In the anaerobic ammonium oxidation reaction, ammonium ion and nitrite ion react with each other at a ratio of about 1: 1.3 as expressed by the above equation (1). Therefore, in the anaerobic ammonium oxidation method, nitrite-type nitrification is performed in which a portion of ammonium nitrogen is oxidized to nitrite nitrogen.

Wastewater treatment system by anaerobic ammonium oxidation method is roughly divided into a single tank system for performing the nitrite-type nitrification and the anaerobic ammonium oxidation in one tank, and a two-tank system using an ammonium oxidation tank for performing the nitrite-type nitrification and an anaerobic ammonium oxidation reaction tank for performing the anaerobic ammonium oxidation. As the two-tank system, there are a one-pass type in which all of the nitrogen-containing wastewater is introduced into the ammonium oxidation tank and a portion of ammonium nitrogen is partially nitritated, and a bypass type in which a portion of the nitrogen-containing wastewater is introduced into the ammonium oxidation tank and all of the ammonium nitrogen is nitritated while the rest of the nitrogen-containing wastewater is bypassed and merged.

In general, the nitrite-type nitrification in which the ammonium nitrogen is oxidized to nitrite nitrogen uses microbial sludge containing nitrifying bacteria. The nitrifying bacteria are generally a mixture of ammonium oxidizing bacteria (AOB) for oxidizing the ammonium nitrogen to nitrite nitrogen and nitrite oxidizing bacteria (NOB) for oxidizing the nitrite nitrogen to the nitrate nitrogen. Therefore, in any wastewater treatment system, it is important to control progress of the nitrite-type nitrification to properly maintain a ratio of nitrite ions to ammonium ions, which are introduced into the anaerobic ammonium oxidation reaction tank.

It has been known that it is not easy to stabilize the nitrite nitrogen produced by partial oxidation of the ammonium nitrogen in the nitrite-type nitrification using the microbial sludge containing nitrifying bacteria. Since the nitrite oxidizing bacteria are likely to grow in normal water quality of the nitrogen-containing wastewater, the nitrite nitrogen tends to be oxidized to the nitrate nitrogen, resulting in consumption of reactive substrate of the anaerobic ammonium oxidation reaction. Therefore, studies have been made on growth conditions and activation conditions to enhance activity of the ammonium oxidizing bacteria, inhibition conditions to inhibit activity of the nitrite oxidizing bacteria, and the like.

For example, Patent Document 1 discloses a method for producing a nitrite-type nitrification carrier in which microbial sludge collected from lake bottom mud, soil or the like is entrapped and immobilized to be heated at 30 to 80°C, and a method for producing the nitrite-type nitrification carrier in which either prepolymer or monomer for immobilizing microorganisms is polymerized in the presence of the collected microbial sludge while being heated at 30 to 80°C. In these production methods, the ammonium oxidizing bacteria in the microbial sludge are preferentially accumulated by performing heat treatment at 30 to 80°C.

### [Citation List]

### [Patent Literature]

[Patent Document 1]
Japanese Patent Application Publication No. 2003-211177

### [Summary of Invention]

### [Technical Problem]

Conventionally, as disclosed in Patent Document 1, in accumulation of the ammonium oxidizing bacteria contained in the microbial sludge, a method of heating the microbial sludge or the nitrite-type nitrification carrier during or immediately after production of the carrier has been employed. However, even when the nitrifying bacteria are once heated to accumulate the ammonium oxidizing bacteria, when wastewater treatment is then continued, activity of the nitrite oxidizing bacteria is restored. Therefore, in order to stably continue denitrification process by anaerobic ammonium oxidation method, it is necessary to periodically repeat heat treatment to reduce the activity of the nitrite oxidizing bacteria.

However, when a heating device for heat treatment is newly added to a wastewater treatment facility, there is a problem that construction cost of the facility, installation cost of attached equipment and the like are increased. Further, since energy consumption of the heating device is enormous when the heat treatment is repeated, there is also a problem that original advantage of the anaerobic ammonium oxidation method which can reduce the operation cost is significantly reduced.

Therefore, an object of the present invention is to provide a wastewater treatment apparatus and a wastewater treatment method, in which denitrification process by anaerobic ammonium oxidation method can be stably performed at low cost.

### [Solution to Problem]

In order to solve the above problems, a wastewater treatment apparatus according to the present invention includes an ammonium oxidation tank in which ammonium nitrogen contained in wastewater is oxidized by microbial sludge, and a heating tank in which the microbial sludge withdrawn from the ammonium oxidation tank is subjected to heat treatment, wherein heat used for the heat treatment is supplied from a digestion tank in which waste sludge is digested by anaerobic microorganisms or from a heat source for heating the waste sludge to be digested in the digestion tank, and the microbial sludge subjected to the heat treatment is returned to the ammonium oxidation tank.

Further, a wastewater treatment method according to the present invention uses a wastewater treatment apparatus comprising an ammonium oxidation tank in which ammonium nitrogen contained in wastewater is oxidized by microbial sludge, wherein the microbial sludge withdrawn from the ammonium oxidation tank is subjected to heat treatment by using heat supplied from a digestion tank in which waste sludge is digested by anaerobic microorganisms or from a heat source for heating the waste sludge to be digested in the digestion tank, the microbial sludge subjected to the heat treatment is returned to the ammonium oxidation tank, and the ammonium nitrogen contained in the wastewater is oxidized to nitrite nitrogen.

### [Advantageous Effects of Invention]

According to the present invention, it is possible to provide a wastewater treatment apparatus and a wastewater treatment method, in which denitrification process by anaerobic ammonium oxidation method can be stably performed at low cost.

### [Brief Description of Drawings]

FIG. 1 is a schematic diagram showing a configuration of a wastewater treatment apparatus according to a first embodiment of the present invention;
FIG. 2 is a schematic diagram showing a first example of a structure of a heating tank;
FIG. 3 is a schematic diagram showing a second example of the structure of the heating tank;
FIG. 4 is a schematic diagram showing a third example of the structure of the heating tank;
FIG. 5 is a schematic diagram showing a fourth example of the structure of the heating tank;
FIG. 6 is a schematic diagram showing a configuration of a wastewater treatment apparatus according to a second embodiment of the present invention;
FIG. 7 is a schematic diagram showing a configuration of a wastewater treatment apparatus according to a third embodiment of the present invention;
FIG. 8 is a conceptual diagram showing a process in a first heat exchange tank and a second heat exchange tank;
FIG. 9 is a schematic diagram showing a configuration of a wastewater treatment apparatus according to a fourth embodiment of the present invention; and
FIG. 10 is a schematic diagram showing a configuration of a wastewater treatment apparatus according to a fifth embodiment of the present invention.

### [Description of Embodiments]

### [First Embodiment]

First, a wastewater treatment apparatus and a wastewater treatment method according to a first embodiment of the present invention will be described. In the following drawings, the same components are denoted by the same reference numerals, and redundant description will be omitted.

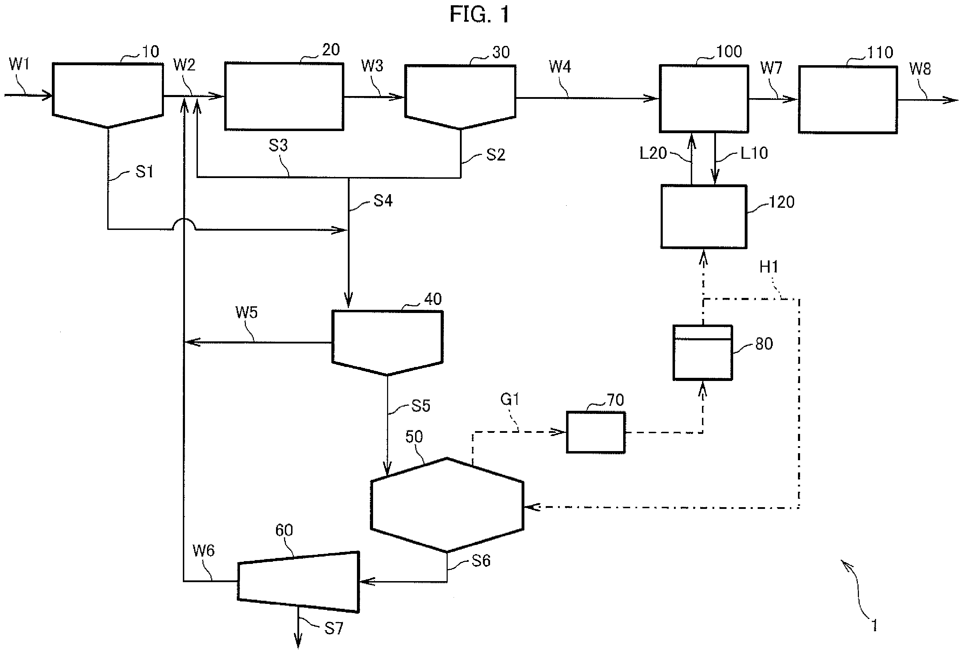

FIG. 1 is a schematic diagram showing a configuration of a wastewater treatment apparatus according to the first embodiment of the present invention. As shown in FIG. 1, a wastewater treatment apparatus 1 includes a first settling basin 10, a biological reaction tank 20, a final settling basin 30, a concentration tank 40, a digestion tank 50, a dehydrator 60, a gas holder 70, a boiler (heat source) 80, an ammonium oxidation tank 100, an anaerobic ammonium oxidation reaction tank 110 and a heating tank 120.

The wastewater treatment apparatus 1 is configured to denitrify nitrogen components contained in wastewater by using anaerobic ammonium oxidation method. In the wastewater treatment apparatus 1, the ammonium oxidation tank 100 for performing nitrite-type nitrification and the anaerobic ammonium oxidation reaction tank 110 for performing anaerobic ammonium oxidation are incorporated in a wastewater treatment system which includes the biological reaction tank 20 and performs biological treatment on organic matter and the like contained in the wastewater.

In the wastewater treatment apparatus 1, microbial sludge or microorganism performing the nitrite-type nitrification is heated in the heating tank 120 to reduce activity of nitrite oxidizing bacteria. The wastewater treatment apparatus 1 is configured to supply heat used to heat the microbial sludge from the existing boiler 80 for heating the digestion tank 50. In the wastewater treatment apparatus 1, heat used for heat treatment is supplied from the boiler 80 by steam or hot water (heating medium H1) produced by combustion of digestion gas G1.

As shown in FIG. 1, influent water W1 (wastewater) which is nitrogen-containing wastewater flows into the wastewater treatment apparatus 1 and is introduced into the first settling basin 10. The influent water W1 is, for example, separated sewage in which rainwater does not join wastewater discharged from business sites and general households, or combined sewage in which rainwater joins wastewater discharged from business sites and general households. Coarse foreign matter and the like may be removed in advance in a sand basin or the like (not shown) from the influent water W1 flowing into the wastewater treatment apparatus 1.

The first settling basin 10 is provided for solid-liquid separating the influent water W1. In the first settling basin 10, sedimentary pollutants and earth and sand contained in the influent water W1 are removed by precipitation at the bottom of the tank. Raw sludge S1 precipitated at the bottom of the tank is withdrawn from the first settling basin 10 to be sent to the concentration tank 40. On the other hand, supernatant water W2 from which the pollutants and earth and sand are removed flows out from the first settling basin 10 to the biological reaction tank 20.

The biological reaction tank 20 is a treatment tank for biological treatment of the supernatant water W2 (wastewater) by activated sludge. In the biological reaction tank 20, organic matter and the like contained in the supernatant water W2 are decomposed by biological treatment. The biological reaction tank 20 may be of any type such as activated sludge process, trickling filter process, aerobic filter bed process, rotating biological contactor process, membrane separation activated sludge process, anaerobic filter bed process, or anaerobic granular sludge bed process, as long as it is a treatment tank for biological treatment using microorganisms. Biologically treated water W3 treated by the activated sludge is sent from the biological reaction tank 20 to the final settling basin 30.

The final settling basin 30 is provided for solid-liquid separating the biologically treated water W3. In the final settling basin 30, activated sludge S2 contained in the biologically treated water W3 is removed by precipitation at the bottom of the tank. Supernatant water W4 from which the activated sludge S2 is removed is sent from the final settling basin 30 to the ammonium oxidation tank 100. On the other hand, the activated sludge S2 precipitated at the bottom of the tank is withdrawn from the final settling basin 30, and a portion of the activated sludge S2 necessary to maintain a microbial amount in the biological reaction tank 20 is returned to the biological reaction tank 20 as return sludge S3. Further, the rest of the activated sludge S2 is sent to the concentration tank 40 as excess sludge S4. Note that, the final settling basin 30 may be omitted when the biological reaction tank 20 is a type of trickling filter process, membrane separation activated sludge process, or the like.

The concentration tank 40 is provided for separating water from the excess sludge S4. In the concentration tank 40, since water contained in the excess sludge S4 is separated, the excess sludge S4 is concentrated and reduced in volume. The concentration tank 40 may be of any type such as a mechanical type by centrifugal separation, belt press or the like, a gravity type in which the excess sludge S4 is naturally settled by gravity, or a dissolved air flotation type in which the excess sludge S4 is floated with air bubbles to be separated. Separated water W5 separated from the excess sludge S4 is returned from the concentration tank 40 to the biological reaction tank 20. On the other hand, concentrated sludge S5 is sent from the concentration tank 40 to the digestion tank 50.

The digestion tank 50 is a treatment tank in which the concentrated sludge S5 (waste sludge) is digested by anaerobic microorganisms. In the digestion tank 50, organic matter and the like contained in the concentrated sludge S5 are decomposed so that properties of the concentrated sludge S5 are stabilized. A stirring device for preventing precipitation of the concentrated sludge S5 is installed in the digestion tank 50. The stirring device may be of any type such as mechanical stirring or gas stirring. Digested sludge S6 is withdrawn from the digestion tank 50 to be sent to the dehydrator 60. Further, the digestion gas G1 containing methane, carbon dioxide and the like produced by, for example, methane fermentation is recovered in the gas holder 70.

The dehydrator 60 is provided for dehydrating the digested sludge S6. The dehydrator 60 may be of any type such as a centrifugal separation type, a belt press type, a screw press type, a rotary press type, a vacuum decompression type or a multiple disk dehydration type. The separated water W6 separated from the digested sludge S6 is returned from the dehydrator 60 to the biological reaction tank 20. On the other hand, the dehydrated sludge S7 having a low water content by dehydration is discharged outside the system from the dehydrator 60 to be discarded after drying, incineration or the like.

The gas holder 70 is provided for storing the digestion gas G1 produced by digestion by the anaerobic microorganisms. The gas holder 70 may be of any type such as a wet type for hermetically sealing the digestion gas G1 on a liquid surface, a dry type for hermetically sealing the digestion gas G1 in a container made of steel or the like, a double membrane type for hermetically sealing the digestion gas G1 with a double membrane, or an occlusion type for adsorbing and storing the digestion gas G1 by an adsorbent. Sulfides such as hydrogen sulfide are removed, as needed, from the digestion gas G1 recovered from the digestion tank 50. As a device for removing the sulfides, for example, a dry-type desulfurization device using a desulfurizing agent, or a wet-type desulfurization device in which the sulfides and water, alkaline aqueous solution or the like are brought into gas-liquid contact can be used. Further, water, siloxane and the like are removed, as needed, from the digestion gas G1 which is a fuel supplied from the gas holder 70. As a device for removing water, for example, a demister or a dehumidifier using a desiccant can be used. Further, as a device for removing siloxane, for example, an adsorption device using activated carbon, zeolite or the like can be used.

The boiler 80 is provided for heating the concentrated sludge S5 (waste sludge) to be digested in the digestion tank 50. The boiler 80 uses the digestion gas G1 recovered from the digestion tank 50 as the fuel. The boiler 80 heats supplied water with heat obtained by burning the digestion gas G1, so as to produce high temperature heating medium H1 for heating the concentrated sludge S5. The heating medium H1 may be steam or hot water. The high temperature heating medium H1 produced by the boiler 80 is supplied to the digestion tank 50 and heat the concentrated sludge S5 to enhance digestion reaction. For example, the steam produced by the boiler 80 may directly heat the concentrated sludge S5 to be digested in the digestion tank 50, or the hot water produced by the boiler 80 may heat the concentrated sludge S5 by heat exchange using a heat exchanger (not shown) attached to the digestion tank 50. The concentrated sludge S5 is usually heated to a medium temperature range of 20 to 40°C or a high temperature range of 40 to about 55°C depending on ambient temperature, a recovery target amount of the digestion gas G1, or the like.

The ammonium oxidation tank 100 is a treatment tank in which ammonium nitrogen contained in the supernatant water W4 (wastewater) is oxidized by the microbial sludge or microorganism. In the ammonium oxidation tank 100, a portion of the ammonium nitrogen contained in the supernatant water W4 is partially nitritated to nitrite nitrogen by action of ammonium oxidizing bacteria contained in the microbial sludge, so that a ratio of ammonium ions to nitrite ions in treated water W7 introduced into the anaerobic ammonium oxidation reaction tank 110 in a subsequent stage is controlled to about 1 to 1.3.

In FIG. 1, the ammonium oxidation tank 100 is a one-pass type in which a total amount of the supernatant water W4 (wastewater) is partially nitrified, but may be a bypass type. That is, while a portion of the supernatant water W4 (wastewater) is introduced into the ammonium oxidation tank 100 and a total amount of the ammonium nitrogen is oxidized to nitrite nitrogen, the rest of the supernatant water W4 may be bypassed to be merged into the anaerobic ammonium oxidation reaction tank 110 without nitrite-type nitrification.

The microbial sludge or microorganism used in the ammonium oxidation tank 100 may be used in any state such as a state entrapped and immobilized on a carrier, a state attached and immobilized on the carrier, a state of fixed biofilm on the carrier, a state in which granules are formed by self granulation, or a state of floating sludge floating in water. Further, the immobilized microbial sludge may be used in any form of fixed bed, fluidized bed or moving bed.

The carrier in the fluidized bed can have an appropriate shape such as a cubic shape, a rectangular parallelepiped shape, a spherical shape or a cylindrical shape. As a material of the carrier, monomethacrylates, monoacrylates, dimethacrylates, diacrylates, trimethacrylates, triacrylates, tetraacrylates, urethane acrylates, epoxy acrylates, polyvinyl alcohol, polyethylene glycol, polypropylene glycol, acrylamide or the like can be used. A size of the carrier is not particularly limited, but may be, for example, 3 mm square.

The ammonium oxidation tank 100 can be provided with an air diffuser for performing aeration or a pH adjuster for supplying alkali such as sodium hydrogen carbonate or sodium hydroxide to the wastewater. The ammonium oxidation tank 100 is usually operated at a water temperature of 10°C to 40°C without heating, but it may be heated by a heating device when there is an inexpensive heat source. The ammonium oxidation tank 100 is usually adjusted to pH 6 to pH 9 and preferably to pH 7.5 to pH 8.2.

The ammonium oxidation tank 100 may be provided with, in a subsequent stage thereof, a pH adjustment tank for adjusting pH or a degassing tank for degassing the treated water W7 to be sent to the anaerobic ammonium oxidation reaction tank 110. Further, in a case of the bypass type, the ammonium oxidation tank 100 may be provided with a mixing tank for merging the supernatant water W4 bypassing the ammonium oxidation tank 100. When the ammonium nitrogen contained in the supernatant water W4 (wastewater) is partially nitritated, the treated water W7 containing nitrite nitrogen and ammonium nitrogen is sent from the ammonium oxidation tank 100 to the anaerobic ammonium oxidation reaction tank 110.

The anaerobic ammonium oxidation reaction tank 110 is a treatment tank in which nitrite nitrogen and ammonium nitrogen contained in the treated water W7 (wastewater) partially nitrified are co-denitrified by anaerobic ammonium oxidizing bacteria. In the anaerobic ammonium oxidation reaction tank 110, nitrite nitrogen and ammonium nitrogen contained in the treated water W7 are converted into nitrate nitrogen and nitrogen gas under anaerobic conditions.

The anaerobic ammonium oxidizing bacteria may be used in any state such as the state entrapped and immobilized on the carrier, the state attached and immobilized on the carrier, the state of fixed biofilm on the carrier, the state in which the granules are formed by self granulation, or the state of floating sludge floating in water. Further, the immobilized anaerobic ammonium oxidizing bacteria may be used in any form of fixed bed, fluidized bed or moving bed. Size, material and shape of fluidized bed carrier can be the same as those in the ammonium oxidation tank 100.

The anaerobic ammonium oxidation reaction tank 110 can be provided with a stirring device for stirring the wastewater in the tank or a pH adjustment tank for supplying an acid such as sulfuric acid or hydrochloric acid to the wastewater. Water temperature in the anaerobic ammonium oxidation reaction tank 110 is preferably maintained at 20°C to 40°C, and more preferably maintained at 30°C to 37°C. The anaerobic ammonium oxidation reaction tank 110 is usually adjusted to pH 6.5 to pH 9 and preferably to pH 7.0 to pH 8.2. Treated water W8 in which nitrogen components is reduced in concentration after denitrification process by anaerobic ammonium oxidation is, for example, sent to a treated water tank or the like (not shown), and then released to a river, an ocean or the like.

In the wastewater treatment apparatus 1, the microbial sludge containing nitrifying bacteria is used in the ammonium oxidation tank 100. Normally, nitrifying bacteria obtained by enrichment culture of sludge is a mixture of the ammonium oxidizing bacteria (AOB) classified as Nitrosomonas genus, Nitrosococcus genus, Nitrosospira genus, Nitrosolobus genus, etc., and the nitrite oxidizing bacteria (NOB) classified as Nitrobactor genus, Nitrospina genus, Nitrococcus genus, Nitrospira genus, etc. In general, for example, when water temperature is low, when concentration of nitrite nitrogen and ammonium nitrogen is low like sewage, when dissolved oxygen concentration is high, or when the pH is low, the activity of the nitrite oxidizing bacteria is dominant, and the nitrifying bacteria oxidize nitrite nitrogen to nitrate nitrogen, resulting in consumption of reactive substrate of anaerobic ammonium oxidation reaction.

Therefore, in the wastewater treatment apparatus 1, a portion or all of the microbial sludge is periodically withdrawn from the ammonium oxidation tank 100, and the microbial sludge withdrawn from the ammonium oxidation tank 100 is subjected to heat treatment. Then, the microbial sludge in which the activity of the nitrite oxidizing bacteria is reduced by the heat treatment is returned to the ammonium oxidation tank 100, so that ammonium nitrogen contained in the supernatant water W4 (wastewater) to be denitrified is oxidized to nitrite nitrogen. By this wastewater treatment method for controlling the nitrite-type nitrification, the denitrification process by anaerobic ammonium oxidation method can be stably continued.

Temperature of the heat treatment is preferably 30 to 90°C and more preferably 40 to 70°C. When the microbial sludge is entrapped and immobilized on the carrier, it is particularly preferably 50 to 70°C, or around 60°C. Further, time of the heat treatment is preferably 1 hour or more, and is preferably 2 weeks or less in view of reducing unnecessary energy. Interval for performing the heat treatment may be every few hours, every 24 hours, every several months or the like.

As shown in FIG. 1, the wastewater treatment apparatus 1 is provided with the heating tank 120 for heating the microbial sludge withdrawn from the ammonium oxidation tank 100. The heating tank 120 is connected with the existing boiler 80 provided for heating the digestion tank 50 through a pipe for a heating medium, so that the high temperature heating medium (H1) produced by the boiler can be supplied. The wastewater treatment performed in the wastewater treatment apparatus 1 (wastewater treatment method according to the first embodiment) is to heat the microbial sludge withdrawn from the ammonium oxidation tank 100 by using the heat supplied from the existing boiler (heat source) 80 for heating the concentrated sludge S5 (waste sludge) to be digested in the digestion tank 50, and to return the microbial sludge, in which the activity of the nitrite oxidizing bacteria is reduced by the heat treatment, to the ammonium oxidation tank 100, so as to prevent consumption of the nitrite nitrogen obtained by the ammonium oxidizing bacteria.

As shown in FIG. 1, the wastewater treatment apparatus 1 may be provided with a transfer path L10 for transferring the microbial sludge from the ammonium oxidation tank 100 to the heating tank 120, and a return path L20 for returning the heated microbial sludge from the heating tank 120 to the ammonium oxidation tank 100.

The transfer path L10 and the return path L20 are formed by, for example, a pipe or a hose, and can be configured to withdraw and transfer the immobilized microbial sludge, the microbial sludge forming the granules by self granulation, or the microbial sludge floating in water, together with the wastewater from the ammonium oxidation tank 100. As a transfer pump, pumps of various types such as an air lift pump, a screw pump, a piston pump, a hose pump or the like can be used.

When the microbial sludge or microorganism is in the state entrapped and immobilized on the carrier, in the state attached and immobilized on the carrier, in the state of fixed biofilm on the carrier, or in the state in which granules are formed by self granulation, the transfer path L10 and the return path L20 can be configured to lift and transfer the microbial sludge from the wastewater with a sieve-like container of a strainer type, a colander type or the like. The sieve-like container may be provided to automatically move between the ammonium oxidation tank 100 and the heating tank 120.

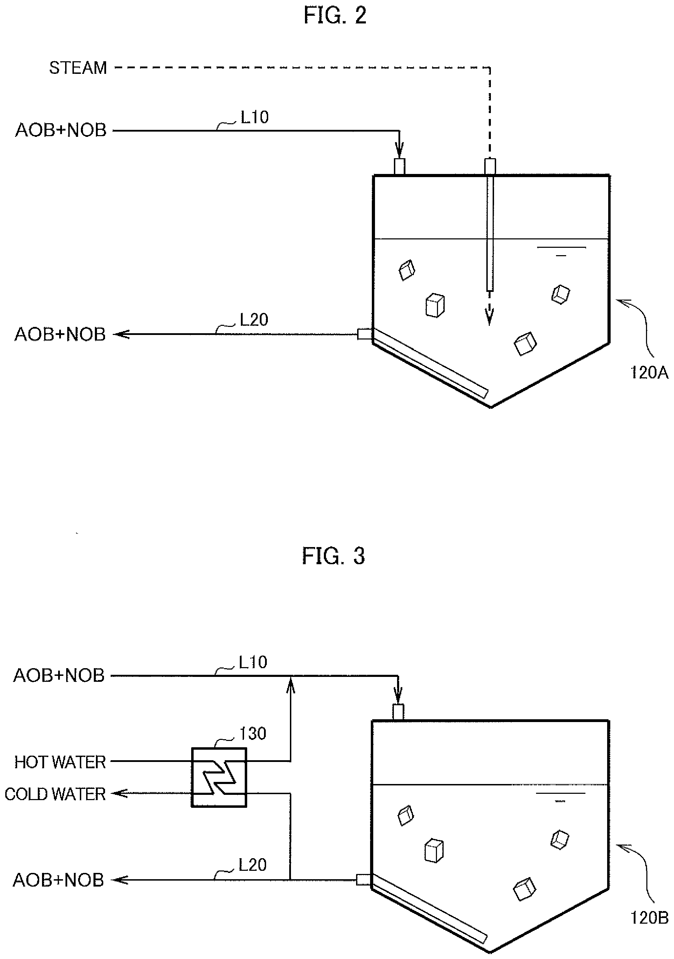

FIG. 2 is a schematic diagram showing a first example of a structure of a heating tank, and the FIG. 3 is a schematic diagram showing a second example of the structure of the heating tank. As shown in FIGS. 2 and 3, the heating tank 120 for heating the microbial sludge may be an aquarium-type heating tank (120A, 120B) for heating water containing the microbial sludge (AOB + NOB).

For example, the microbial sludge (AOB + NOB) withdrawn together with the wastewater from the ammonium oxidation tank 100 is introduced into the aquarium-type heating tank 120A shown in FIG. 2 through the transfer path L10 formed by the pipe, hose or the like. In addition, the heat used for the heat treatment is supplied from the boiler 80 to the heating tank 120A by the steam (heating medium H1). A portion of the steam (heating medium H1) produced by the boiler 80 burning the digestion gas G1 is supplied to the digestion tank 50 (see FIG. 1) to heat the concentrated sludge S5, while the rest of the steam is supplied to the heating tank 120A to be used for directly heating the wastewater (supernatant water W4) containing the microbial sludge (AOB +NOB). Then, the microbial sludge in which the activity of the nitrite oxidizing bacteria is reduced by the heat treatment is returned to the ammonium oxidation tank 100 through the return path L20 formed by the pipe, hose or the like, so that the nitrite-type nitrification can be stably continued because the activity of the nitrite oxidizing bacteria consuming nitrous acid is reduced.

Further, the microbial sludge (AOB + NOB) withdrawn together with the wastewater from the ammonium oxidation tank 100 is introduced into the aquarium-type heating tank 120B shown in FIG. 3 through the transfer path L10 formed by the pipe, hose or the like. In addition, the heat used for the heat treatment is supplied from the boiler 80 to the heating tank 120B by the hot water (heating medium H1). A portion of the hot water (heating medium H1) produced by the boiler 80 burning the digestion gas G1 is supplied to the digestion tank 50 (see FIG. 1) to heat the concentrated sludge S5, while the rest of the hot water is supplied to a heat exchanger 130 attached to the heating tank 120B to be used to heat the wastewater (supernatant water W4) containing the microbial sludge (AOB +NOB) by heat exchange. Then, the microbial sludge in which the activity of the nitrite oxidizing bacteria is reduced by the heat treatment is returned to the ammonium oxidation tank 100 through the return path L20 formed by the pipe, hose or the like, so that the nitrite-type nitrification can be stably continued.

The aquarium-type heating tank (120A, 120B) may be configured to heat the microorganism sludge withdrawn from the ammonium oxidation tank 100 in the wastewater withdrawn from the ammonium oxidation tank 100, or to heat the microorganism sludge in water to be supplied from other than the ammonium oxidation tank 100. For example, the microbial sludge may be lifted and transferred with the sieve-like container of the strainer type, the colander type or the like from the wastewater of the ammonium oxidation tank 100, so as to be charged into the heating tank (120A, 120B) storing the water supplied from other than the ammonium oxidation tank 100, to be subjected to the heat treatment. As the water to be supplied, for example, the treated water W8 treated by the wastewater treatment apparatus 1, other industrial water, or water such as tap water can be used by appropriately adjusting the pH, the salt concentration or the like.

The microbial sludge withdrawn from the ammonium oxidation tank 100 may be directly contacted and heated with the heating medium in water adjusted to satisfy at least one of pH 10 or more and a salt concentration of 4% or more. When the heat treatment is performed in the water having a high pH or a high salt concentration in this way, the activity of the nitrite oxidizing bacteria is effectively reduced. Therefore, it is possible to lower the temperature of the heat treatment or to shorten the time of the heat treatment, thereby further reducing energy consumption of the heat treatment and operation cost of the apparatus.

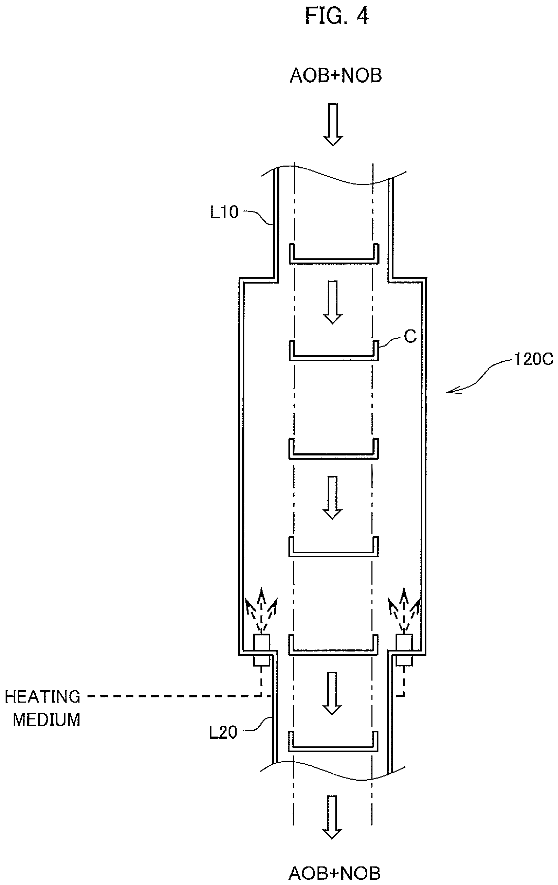

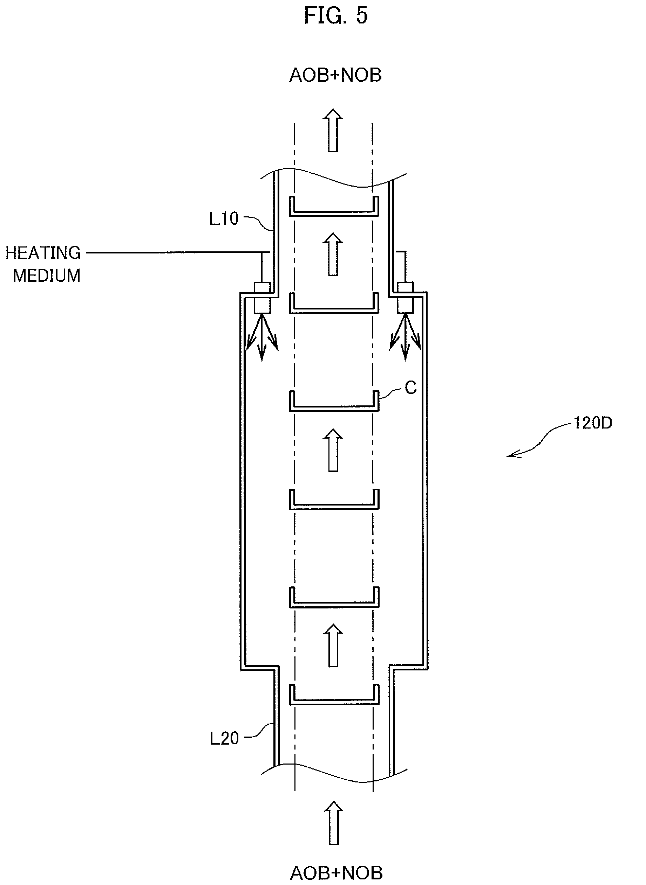

FIG. 4 is a schematic diagram showing a third example of the structure of the heating tank, and FIG. 5 is a schematic diagram showing a fourth example of the structure of the heating tank. As shown in FIGS. 4 and 5, the heating tank 120 for heating the microbial sludge may also be a contact type heating tank (120C, 120D) for heating the microbial sludge (AOB + NOB) in a counter flow.

For example, the microbial sludge (AOB + NOB) withdrawn from the wastewater of the ammonium oxidation tank 100 by a sieve-like container C of a strainer type, a colander type or the like is introduced into the contact type heating tank 120C shown in FIG. 4 through the transfer path L10. In addition, the heat used for the heat treatment is supplied by the heating medium H1 from the boiler 80 to the heating tank 120C. The heating medium H1 produced by the boiler 80 burning the digestion gas G1 is supplied into the heating tank 120C to be used to heat the microbial sludge (AOB + NOB). Then, the microbial sludge in which the activity of the nitrite oxidizing bacteria is reduced by the heat treatment is returned to the ammonium oxidation tank 100 through the return path L20, so that the nitrite-type nitrification can be stably continued. Direction of the counter flow may be such that the heating medium H1 is upward and the microbial sludge (AOB + NOB) is downward as shown in FIG. 4, or may be opposite as shown in FIG. 5. Further, the heating medium H1 may be hot water or hot air.

According to the wastewater treatment apparatus 1 and the wastewater treatment method described above, since the heat used to heat the microbial sludge is supplied from the existing boiler 80 for heating the digestion tank 50, it is not necessary to newly add a heating device for heat treatment to a wastewater treatment facility. That is, it is possible to use the existing boiler provided for the digestion tank as the heat source for the heat treatment, thereby reducing construction cost of the facility, installation cost of attached equipment, maintenance cost and the like. Further, since the heat used to heat the microbial sludge is supplied by using the digestion gas G1 as a fuel, energy efficiency is improved by using waste heat. That is, it is not necessary to newly provide a heat source only for the heat treatment, and the activity of the nitrite oxidizing bacteria is reduced by the heat treatment excellent in the energy efficiency so that the nitrite-type nitrification is properly maintained, and thus it is possible to stably perform the denitrification process by the anaerobic ammonium oxidation method at low cost.

### [Second Embodiment]

Next, the wastewater treatment apparatus and the wastewater treatment method according to a second embodiment of the present invention will be described.

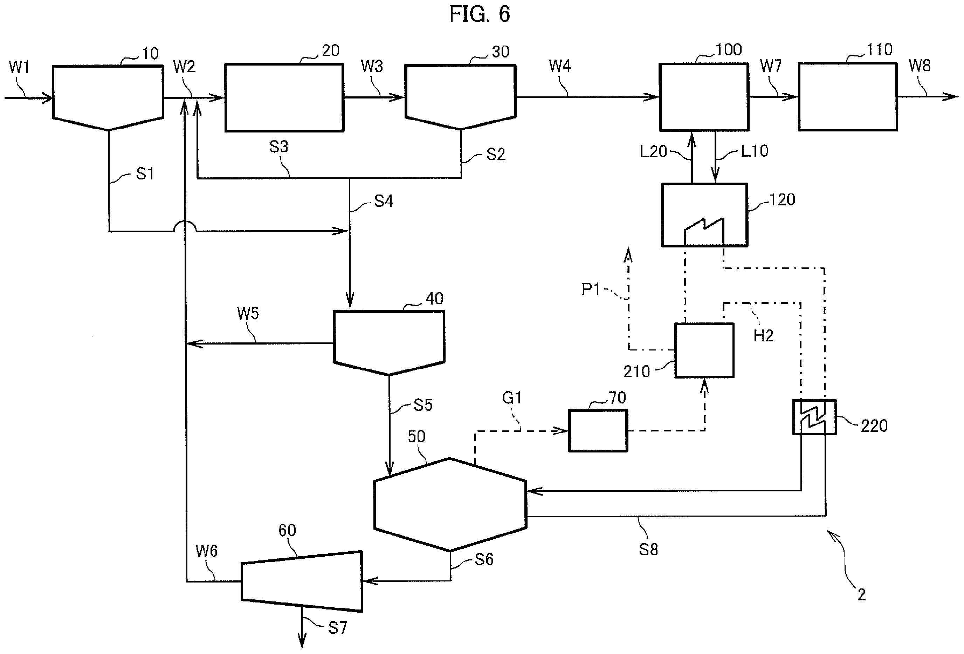

FIG. 6 is a schematic diagram showing a configuration of the wastewater treatment apparatus according to the second embodiment of the present invention. As shown in FIG. 6, similarly to the wastewater treatment apparatus 1, a wastewater treatment apparatus 2 according to the second embodiment includes the first settling basin 10, the biological reaction tank 20, the final settling basin 30, the concentration tank 40, the digestion tank 50, the dehydrator 60, the gas holder 70, the boiler (heat source) 80, the ammonium oxidation tank 100 and the anaerobic ammonium oxidation reaction tank 110.

The wastewater treatment apparatus 2 according to the second embodiment is different from the wastewater treatment apparatus 1 by including, instead of the boiler (heat source) 80, a generator 210 (heat source) using the digestion gas G1 as the fuel, and an exhaust heat exchanger 220 for heating the digestion tank 50 by heat exchange with waste heat of the generator 210.

In the wastewater treatment apparatus 2, the microbial sludge performing the nitrite-type nitrification is heated in the heating tank 120, so that the activity of the nitrite oxidizing bacteria is reduced. The wastewater treatment apparatus 2 is configured to supply the heat used to heat the microbial sludge from the existing generator 210 for heating the digestion tank 50. The heat used for the heat treatment is supplied by exhaust gas, steam or hot water (heating medium H2) discharged as the waste heat from the generator 210.

The generator 210 generates power P1 usable for various usages using the digestion gas G1 as the fuel. The generator 210 supplies the waste heat, which is generated when generating power using the digestion gas G1 as the fuel, to the heat exchanger 220 for heating concentrated sludge S8 to be digested in the digestion tank 50. The generator 210 may be of any type such as a gas engine, a gas turbine or a fuel cell. The gas turbine may be a large gas turbine or a micro turbine. Further, as long as the generator 210 uses the digestion gas G1 produced by digestion, other fuels may be used in combination.

The generator 210 with the gas engine includes, for example, a cylinder that forms a combustion chamber, a piston that forms the combustion chamber together with the cylinder and reciprocates in the cylinder, an intake port that supplies the digestion gas G1 as the fuel to the combustion chamber, and an exhaust port that discharges the exhaust gas produced by combustion of the digestion gas G1 from the combustion chamber, along with an induction power generation mechanism. In the generator 210 with the gas engine, the digestion gas G1 as the fuel is supplied into the combustion chamber, and reciprocating motion of the piston is driven by a combustion stroke to be converted to a rotational motion of a rotor for generating the power P1. The exhaust gas (heating medium H2) produced by combustion of the digestion gas G1 is discharged from the combustion chamber through the exhaust port to be supplied to the exhaust heat exchanger 220.

The generator 210 with the gas turbine includes, for example, a casing having a compressor stator blade and a turbine stator blade, a rotor rotatably supported in the casing and having a compressor rotor blade and a turbine rotor blade, and a combustor for burning the digestion gas G1 as the fuel in compressed air, along with the induction power generation mechanism. In the generator 210 with the gas turbine, air sucked into the casing is compressed by the compressor stator blade and the compressor rotor blade due to rotation of the rotor and is supplied to the combustor. The digestion gas G1 is injected and burned in the compressed air supplied to the combustor, and the burned gas of high temperature and high pressure passes between the turbine stator blade and the turbine rotor blade to drive the rotational motion of the rotor for generating the power P1. The exhaust gas (heating medium H2), which is produced by combustion of the digestion gas G1 and passes between the turbine stator blade and the turbine rotor blade, is discharged from the casing to be supplied to the exhaust heat exchanger 220.

The generator 210 with the fuel cell includes, for example, a reformer for steam reforming the fuel digestion gas G1, a transformer for converting carbon monoxide produced by steam reforming into carbon dioxide, a battery body having a fuel electrode, an air electrode and a separator, a cooling system for cooling the battery body with cooling water, and a steam separator for separating steam for steam reforming from the cooling system. In the generator 210 with the fuel cell, the steam is mixed with the digestion gas G1 as the fuel, and the steam reforming is performed in the reformer. When hydrogen gas produced by the steam reforming is supplied to the fuel electrode and air is supplied to the air electrode, electric power P1 is generated in the battery body by electrochemical reaction between hydrogen and oxygen. One or more of the exhaust gas (heating medium H2) produced in the reformer, the hot water (heating medium H2) of the cooling system, which receives heat by cooling the heat of the battery body, and steam (heating medium H2) discharged from the battery body by the electrochemical reaction is supplied to the exhaust heat exchanger 220.

The exhaust heat exchanger 220 is provided for heat exchanging the waste heat of the generator 210 to heat the concentrated sludge S8 (waste sludge) to be digested in the digestion tank 50. In FIG. 6, the exhaust heat exchanger 220 is configured to perform heat exchange between the concentrated sludge S8 withdrawn from the digestion tank 50 and the heating medium H2 carrying the waste heat of the generator 210, however, it may be configured to perform heat exchange between the concentrated sludge S8 to be digested in the digestion tank 50 and the heating medium H2 carrying the waste heat of the generator 210 via another heating medium such as steam or hot water. The exhaust heat exchanger 220 may be, for example, any one of a multi-tube cylindrical heat exchanger, a double pipe heat exchanger, a tank coil heat exchanger, a tank jacket heat exchanger, a spiral plate heat exchanger, and a liquid film heat exchanger.

As shown in FIG. 6, the wastewater treatment apparatus 2 is provided with the heating tank 120 for heating the microbial sludge withdrawn from the ammonium oxidation tank 100. The heating tank 120 is connected with the exhaust heat exchanger 220 and the existing generator 210 for heating the digestion tank 50 through the pipe for the heating medium, so that it can be supplied with the heating medium H2 carrying the waste heat from the generator 210 and can supply the heating medium H2 to the exhaust heat exchanger 220. The wastewater treatment performed in the wastewater treatment apparatus 2 (wastewater treatment method according to the second embodiment) is to heat the microbial sludge withdrawn from the ammonium oxidation tank 100 by using the heat supplied from the existing generator (heat source) 210 for heating the concentrated sludge S8 (waste sludge) to be digested in the digestion tank 50, and to return the microbial sludge, in which the activity of the nitrite oxidizing bacteria is reduced by the heat treatment, to the ammonium oxidation tank 100, so that the ammonium nitrogen contained in the wastewater is oxidized to the nitrite nitrogen.

As shown in FIG. 6, the wastewater treatment apparatus 2 may be provided with the transfer path L10 for transferring the microbial sludge from the ammonium oxidation tank 100 to the heating tank 120, and the return path L20 for returning the heated microbial sludge from the heating tank 120 to the ammonium oxidation tank 100. The heating tank 120 for heating the microbial sludge is preferably the aquarium-type heating tank (see FIGS. 2 and 3) for heating the wastewater containing the microbial sludge in view of preventing complication of the configuration of the apparatus. Other configurations are the same as those of the wastewater treatment apparatus 1 described above.

For example, the microbial sludge withdrawn together with the wastewater from the ammonium oxidation tank 100 is introduced into the aquarium-type heating tank 120 through the transfer path L10 formed by the pipe, hose or the like. In addition, the heat used for the heat treatment is supplied from the generator 210 to the heating tank 120 by the exhaust gas, steam or hot water (heating medium H2). The exhaust gas, steam or hot water (heating medium H2) is discharged from the generator 210 in association with power generation using the digestion gas G1 as the fuel, and is supplied to the heat exchanger attached to the aquarium-type heating tank 120 to be used to heat the microbial sludge. Then, the exhaust gas, steam or hot water (heating medium H2) is supplied to the exhaust heat exchanger 220, and is further used to heat the concentrated sludge S8 to be digested in the digestion tank 50. The microbial sludge in which the activity of the nitrite oxidizing bacteria is reduced by the heat treatment is returned to the ammonium oxidation tank 100 through the return path L20 formed by the pipe, hose or the like, so that the nitrite-type nitrification can be stably continued.

According to the wastewater treatment apparatus 2 and the wastewater treatment method described above, since the heat used to heat the microbial sludge is supplied from the existing generator 210 for heating the digestion tank 50, it is not necessary to newly add the heating device for the heat treatment to the wastewater treatment facility. That is, it is possible to use the existing generator as the heat source for the heat treatment, thereby reducing the construction cost of the facility, the installation cost of the attached equipment, the maintenance cost and the like. Further, since the heat used to heat the microbial sludge is supplied by using the digestion gas G1 as the fuel, the energy efficiency is improved by using the waste heat. That is, it is not necessary to newly provide the heat source only for the heat treatment, and the activity of the nitrite oxidizing bacteria is reduced by the heat treatment excellent in the energy efficiency so that the nitrite-type nitrification is properly maintained, and thus it is possible to stably perform the denitrification process by the anaerobic ammonium oxidation method at low cost.

### [Third Embodiment]

Next, the wastewater treatment apparatus and the wastewater treatment method according to a third embodiment of the present invention will be described.

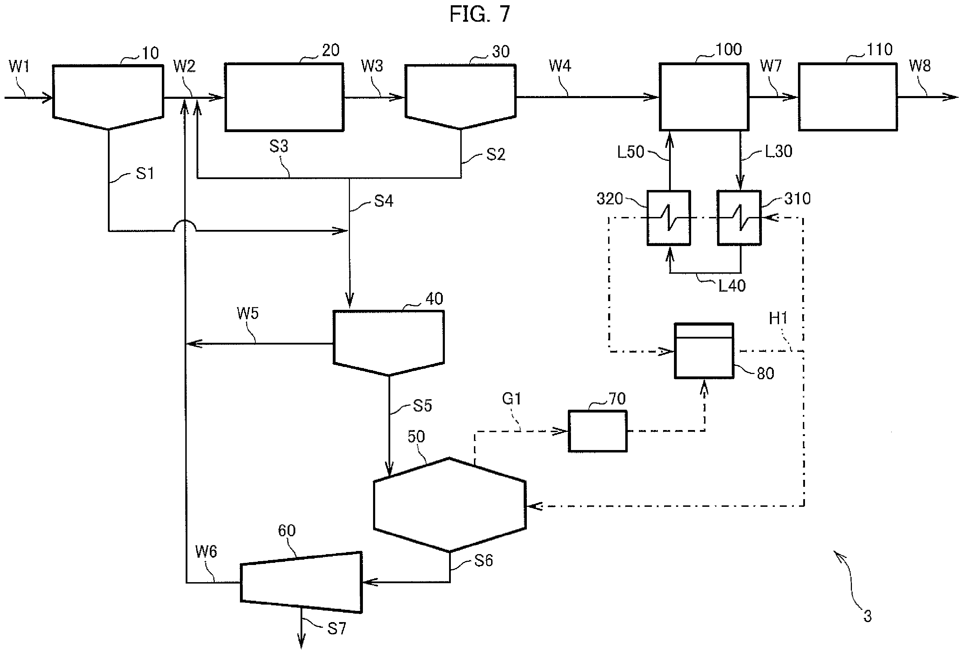

FIG. 7 is a schematic diagram showing a configuration of the wastewater treatment apparatus according to the third embodiment of the present invention. As shown in FIG. 7, similarly to the wastewater treatment apparatus 1, a wastewater treatment apparatus 3 according to the third embodiment includes the first settling basin 10, the biological reaction tank 20, the final settling basin 30, the concentration tank 40, the digestion tank 50, the dehydrator 60, the gas holder 70, the boiler (heat source) 80, the ammonium oxidation tank 100 and the anaerobic ammonium oxidation reaction tank 110.

The wastewater treatment apparatus 3 according to the third embodiment is different from the wastewater treatment apparatus 1 by including, instead of the heating tank 120, a first heat exchange tank 310 for heating the microbial sludge, and a second heat exchange tank 320 for recovering heat from the heated microbial sludge.

In the wastewater treatment apparatus 3, the microbial sludge performing the nitrite-type nitrification is heated in the first heat exchange tank 310, so that the activity of the nitrite oxidizing bacteria is reduced. The wastewater treatment apparatus 3 is configured to recover at least a portion of the heat having been used to heat the microbial sludge by heat exchange from the heated microbial sludge, and reuse it.

The first heat exchange tank 310 heats the microbial sludge withdrawn from the ammonium oxidation tank 100 by heat exchange with the heating medium (H1). The first heat exchange tank 310 may be, for example, any one of the multi-tube cylindrical heat exchanger, the double pipe heat exchanger, the tank coil heat exchanger, and the tank jacket heat exchanger. Further, when the microbial sludge is in the state entrapped and immobilized on the carrier, in the state attached and immobilized on the carrier, in the state of fixed biofilm on the carrier, or in the state in which the granules are formed by self granulation, the first heat exchange tank 310 may be an aquarium-type tank for performing direct contact-type heat exchange to recover the heated microbial sludge by sedimentation separation or flotation separation.

The second heat exchange tank 320 heats the heating medium (H1), which has released heat by heat exchange in the first heat exchange tank 310, by heat exchange with the heated microbial sludge. The second heat exchange tank 320 may be, for example, any one of the multi-tube cylindrical heat exchanger, the double pipe heat exchanger, the tank coil heat exchanger, and the tank jacket heat exchanger. Further, the second heat exchange tank 320 may be the aquarium-type tank similar to the first heat exchange tank 310.

As shown in FIG. 7, the first heat exchange tank 310 and the second heat exchange tank 320 are connected to each other through the pipe for the heating medium, which passes through the second heat exchange tank 320 from the first heat exchange tank 310 and returns to the first heat exchange tank 310, so that a common heating medium (H1) can circulate through the first heat exchange tank 310 and the second heat exchange tank 320. The wastewater treatment performed in the wastewater treatment apparatus 3 (wastewater treatment method according to the third embodiment) is to heat the microbial sludge withdrawn from the ammonium oxidation tank 100 by heat exchange with the heating medium (H1), and to heat the heating medium (H1) having released heat by the heat exchange, by heat exchange with the heated microbial sludge, so that the heating medium (H1) is reused to heat the microbial sludge withdrawn from the ammonium oxidation tank 100, and then to return the microbial sludge, in which the activity of the nitrite oxidizing bacteria is reduced by the heat treatment, to the ammonium oxidation tank 100, so that the ammonium nitrogen contained in the wastewater is oxidized to the nitrite nitrogen.

As shown in FIG. 7, the wastewater treatment apparatus 3 may be provided with a transfer path L30 for transferring the microbial sludge from the ammonium oxidation tank 100 to the first heat exchange tank 310, a relay path L40 for transferring the heated microbial sludge from the first heat exchange tank 310 to the second heat exchange tank 320, and a return path L50 for returning the heated microbial sludge from the second heat exchange tank 320 to the ammonium oxidation tank 100. Structures or the like of the transfer path L30, the relay path L40 and the return path L50 can be the same as those of the transfer path L10 and the return path L20 described above.

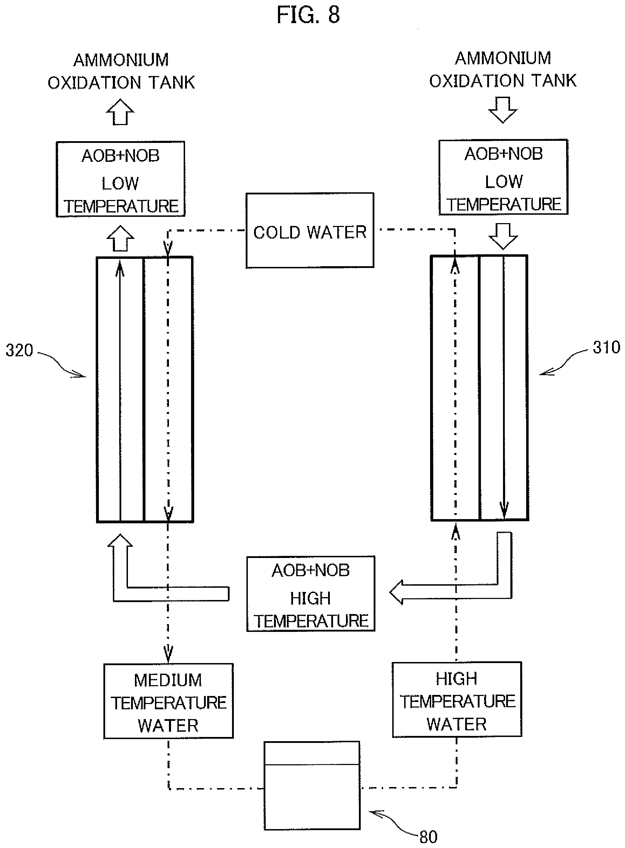

FIG. 8 is a conceptual diagram showing a process in a first heat exchange tank and a second heat exchange tank of the present invention. As shown in FIG. 8, the microbial sludge (AOB + NOB) withdrawn together with the wastewater from the ammonium oxidation tank 100 is introduced into the first heat exchange tank 310 through the transfer path L30. Temperature of the wastewater containing the microbial sludge (AOB + NOB) is low, for example, about 15°C in winter. In addition, high temperature water (heating medium H1) produced by the boiler 80 burning the digestion gas G1 is supplied to the first heat exchange tank 310. Temperature of the high temperature water (heating medium H1) is high, for example, about 60°C.

In the first heat exchange tank 310, heat is exchanged between the wastewater containing the microbial sludge (AOB + NOB) and the high temperature water (heating medium H1) supplied from the boiler 80, so that the microbial sludge (AOB + NOB) of low temperature is heated by the heat exchange. The microbial sludge (AOB + NOB) is heated to, for example, about 60°C by the heat exchange. The microbial sludge in which the activity of the nitrite oxidizing bacteria is reduced by the heat treatment is transferred to the second heat exchange tank 320 through the relay path L40 while maintaining a high temperature. Cold water (heating medium H1) having released heat by the heat exchange with the microbial sludge (AOB + NOB) is sent to the second heat exchange tank 320 through the pipe for the heating medium.

In the second heat exchange tank 320, heat is exchanged between the cold water (heating medium H1) having released heat by the heat exchange in the first heat exchange tank 310 and the wastewater containing the heated microbial sludge, so that the cold water (heating medium H1) having released heat by the heat exchange with the microbial sludge (AOB + NOB) is heated by the heat exchange. Then, the microbial sludge having released heat by the heat exchange in the second heat exchange tank 320 is returned to the ammonium oxidation tank 100 through the return path L50. The heated microbial sludge is cooled, for example, to about 15°C from about 60°C. On the other hand, medium temperature water (heating medium H1) heated by the heat exchange with the microbial sludge is returned to the boiler 80 to be reheated, and is again supplied to the first heat exchange tank 310. Temperature of the medium temperature water (heating medium H1) does not usually return to about 60°C by the heat exchange in the second heat exchange tank 320, and thus the medium temperature water receives an amount of shortfall in heat by the digestion gas G1 as the fuel, and is reused.

The first heat exchange tank 310 and the second heat exchange tank 320 may be configured such that the wastewater from the ammonium oxidation tank 100 is used as the heating medium for the heat exchange so that the microbial sludge withdrawn from the ammonium oxidation tank 100 is heated in the wastewater from the ammonium oxidation tank 100, or may be configured such that water to be supplied is used as the heating medium for the heat exchange so that the microbial sludge withdrawn from the ammonium oxidation tank 100 is heated in the water to be supplied from other than the ammonium oxidation tank 100. For example, the microbial sludge may be lifted and transferred with the sieve-like container of the strainer type, the colander type, or the like from the wastewater of the ammonium oxidation tank 100, and may be charged into the first heat exchange tank 310 and the second heat exchange tank 320, which store the water to be supplied from other than the ammonium oxidation tank 100, to be subjected to the heat exchange. As the water to be supplied, similarly to the aquarium-type heating tank (120A, 120B) described above, the treated water W8 treated by the wastewater treatment apparatus 1, other industrial water, or water such as tap water can be used by appropriately adjusting the pH, the salt concentration or the like.

According to the wastewater treatment apparatus 3 and the wastewater treatment method described above, since at least a portion of the heat having been used to heat the microbial sludge is recovered from the heated microbial sludge to be reused to heat the microbial sludge, the energy efficiency is improved by using the waste heat. That is, the activity of the nitrite oxidizing bacteria is reduced by the heat treatment excellent in the energy efficiency so that the nitrite-type nitrification is properly maintained, and thus it is possible to stably perform the denitrification process by the anaerobic ammonium oxidation method at low cost. Further, it is configured such that the heat used for the heat treatment is supplied from the digestion tank in which the waste sludge is digested by the anaerobic microorganisms or from a heat source for heating the waste sludge to be digested in the digestion tank, and thus it is possible to reduce the construction cost of the facility, the installation cost of the attached equipment, the maintenance cost and the like.

### [Fourth Embodiment]

Next, the wastewater treatment apparatus and the wastewater treatment method according to a fourth embodiment of the present invention will be described.

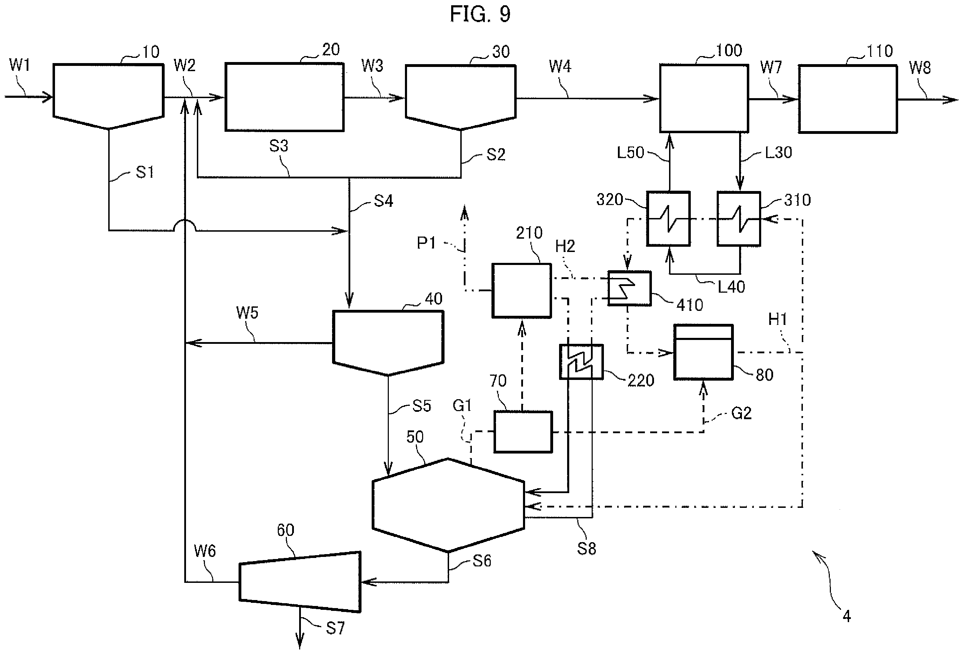

FIG. 9 is a schematic diagram showing a configuration of a wastewater treatment apparatus according to the fourth embodiment of the present invention. As shown in FIG. 9, similarly to the wastewater treatment apparatus 3, a wastewater treatment apparatus 4 according to the fourth embodiment includes the first settling basin 10, the biological reaction tank 20, the final settling basin 30, the concentration tank 40, the digestion tank 50, the dehydrator 60, the gas holder 70, the boiler (heat source) 80, the ammonium oxidation tank 100, the anaerobic ammonium oxidation reaction tank 110, the first heat exchange tank 310 and the second heat exchange tank 320.

The wastewater treatment apparatus 4 according to the fourth embodiment is different from the wastewater treatment apparatus 3 by including, along with the boiler (heat source) 80 using the digestion gas G1 as the fuel, the generator (heat source) 210 using the digestion gas G1 as the fuel, the exhaust heat exchanger 220 for heating the digestion tank 50 by the heat exchange with the waste heat of the generator 210, and an exhaust heat exchanger 410 for supplying the heat used to heat the microbial sludge by the heat exchange with the waste heat of the generator 210.

In the wastewater treatment apparatus 4, the microbial sludge performing the nitrite-type nitrification is heated in the first heat exchange tank 310, so that the activity of the nitrite oxidizing bacteria is reduced. The wastewater treatment apparatus 4 is configured to supply the heat used to heat the microbial sludge from both the existing boiler 80 for heating the digestion tank 50 and the existing generator 210 for heating the digestion tank 50. In the wastewater treatment apparatus 4, the heat used for the heat treatment is supplied from the boiler 80 by the steam or hot water (heating medium H1) produced by combustion of the digestion gas G1, and is supplied from the generator 210 through the exhaust heat exchanger 410 by the exhaust gas, steam or hot water (heating medium H2) discharged as the waste heat.

The exhaust heat exchanger 410 is provided to produce the high temperature heating medium (H1) for heating the microbial sludge by the heat exchange with the waste heat of the generator 210. The exhaust heat exchanger 410, the first heat exchange tank 310 and the second heat exchange tank 320 are connected to each other through the pipe for the heating medium, which passes through the second heat exchange tank 320 from the first heat exchange tank 310, and through the exhaust heat exchanger 410 from the second heat exchange tank 320, and returns to the first heat exchange tank 310, so that the heating medium (H1) common to the exhaust heat exchanger 410, the first heat exchange tank 310 and the second heat exchange tank 320 can circulate therethrough. The exhaust heat exchanger 410 may be, for example, any one of the multi-tube cylindrical heat exchanger, the double pipe heat exchanger, the tank coil heat exchanger, the tank jacket heat exchanger, a plate fin heat exchanger, a fin tube heat exchanger and a direct contact heat exchanger.

As shown in FIG. 9, the wastewater treatment apparatus 4 is provided with the first heat exchange tank 310 for heating the microbial sludge withdrawn from the ammonium oxidation tank 100. The exhaust heat exchanger 220 for heating the digestion tank 50 by the heat exchange with the waste heat of the generator 210, and the exhaust heat exchanger 410 for supplying the heat used to heat the microbial sludge by the heat exchange with the waste heat of the generator 210, are connected to each other through the pipe for the heating medium, which passes through the exhaust heat exchanger 410 from the generator 210, and through the exhaust heat exchanger 220 from the exhaust heat exchanger 410, and returns to the generator 210, so that the heating medium (H2) carrying the waste heat from the generator 210 can circulate therethrough. The wastewater treatment performed in the wastewater treatment apparatus 4 (wastewater treatment method according to the fourth embodiment) is to heat the microbial sludge withdrawn from the ammonium oxidation tank 100 by heat exchange with the heating medium (H1) using the heat supplied from both the existing generator 210 and the existing boiler (heat source) 80 for heating the concentrated sludge S5 (waste sludge) to be digested in the digestion tank 50, and to heat the heating medium (H1) having released heat by the heat exchange, by heat exchange with the heated microbial sludge, so that the heating medium (H1) is reused to heat the microbial sludge withdrawn from the ammonium oxidation tank 100, and then to return the microbial sludge, in which the activity of the nitrite oxidizing bacteria is reduced by the heat treatment, to the ammonium oxidation tank 100, so that the ammonium nitrogen contained in the wastewater is oxidized to the nitrite nitrogen.

In the first heat exchange tank 310, similarly to the wastewater treatment apparatus 3, heat is exchanged between the wastewater containing the microbial sludge and the high temperature water (heating medium H1) supplied from the boiler 80, so that the microbial sludge of low temperature is heated by the heat exchange. In the second heat exchange tank 320, heat is exchanged between the cold water (heating medium H1) having released heat by the heat exchange in the first heat exchange tank 310 and the wastewater containing the heated microbial sludge, so that the cold water (heating medium H1) is heated by the heat exchange.

In the exhaust heat exchanger 410, heat is exchanged between the cold water (heating medium H1) heated by the heat exchange in the second heat exchange tank 320 and the exhaust gas, steam or hot water (heating medium H2) discharged as the waste heat from the generator 210, so that the cold water (heating medium H1) is further heated by the heat exchange. The cold water (heating medium H1) heated by the heat exchange with the waste heat from the generator 210 is returned to the boiler 80 to be reheated, and is again supplied to the first heat exchange tank 310. On the other hand, the heating medium (H2), which carries the waste heat from the generator 210 and has released heat by the heat exchange with the cold water (heating medium H1), is supplied to the exhaust heat exchanger 220, so that the concentrated sludge S8 (waste sludge) to be digested in the digestion tank 50 is heated.

According to the wastewater treatment apparatus 4 and the wastewater treatment method described above, since the heat used to heat the microbial sludge is supplied from both the existing generator 210 and the existing boiler 80 for heating the digestion tank 50, it is not necessary to newly add the heating device for the heat treatment to the wastewater treatment facility. That is, it is possible to use the existing boiler and the generator as the heat source for the heat treatment, thereby reducing the construction cost of the facility, the installation cost of the attached equipment, the maintenance cost and the like. Further, since the heat used to heat the microbial sludge is supplied by using the digestion gas G1 as the fuel, the energy efficiency is improved by using the waste heat. That is, it is not necessary to newly provide the heat source only for the heat treatment, and the activity of the nitrite oxidizing bacteria is reduced by the heat treatment excellent in the energy efficiency so that the nitrite-type nitrification is properly maintained, and thus it is possible to stably perform the denitrification process by the anaerobic ammonium oxidation method at low cost.

### [Fifth Embodiment]

Next, the wastewater treatment apparatus and the wastewater treatment method according to a fifth embodiment of the present invention will be described.

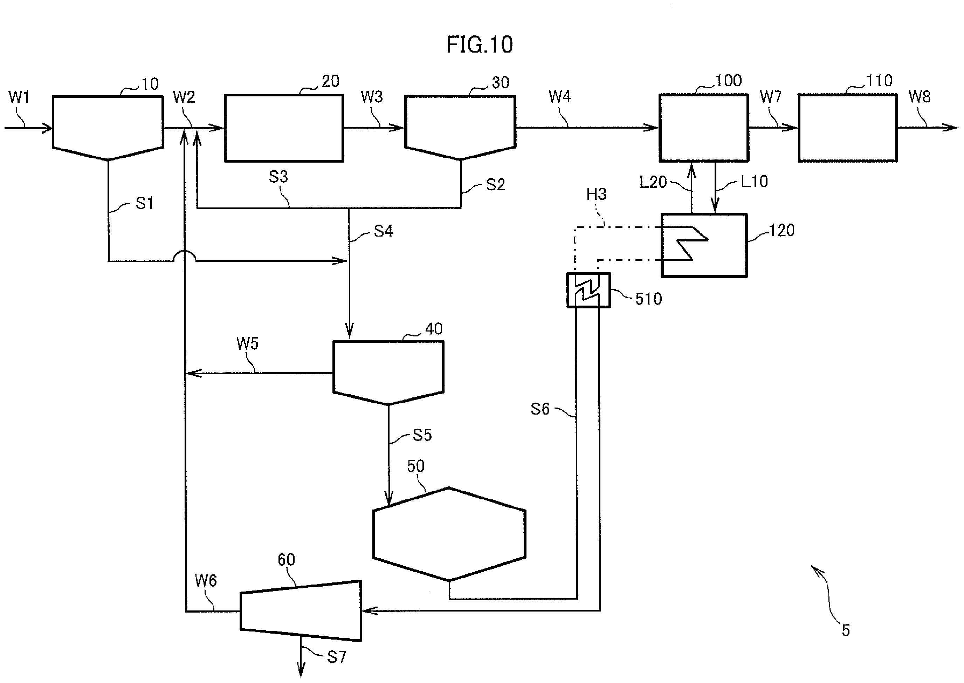

FIG. 10 is a schematic diagram showing a configuration of the wastewater treatment apparatus according to the fifth embodiment of the present invention. As shown in FIG. 10, similarly to the wastewater treatment apparatus 1, a wastewater treatment apparatus 5 according to the fifth embodiment includes the first settling basin 10, the biological reaction tank 20, the final settling basin 30, the concentration tank 40, the digestion tank 50, the dehydrator 60, the gas holder 70, the ammonium oxidation tank 100, the anaerobic ammonium oxidation reaction tank 110 and the heating tank 120.

The wastewater treatment apparatus 5 according to the fifth embodiment is different from the wastewater treatment apparatus 1 by including, instead of the boiler (heat source) 80, a sludge heat exchanger 510 for recovering heat from the digested sludge S6 digested in the digestion tank 50 to supply the heat for the heat treatment.

In the wastewater treatment apparatus 5, the microbial sludge performing the nitrite-type nitrification is heated in the heating tank 120, so that the activity of the nitrite oxidizing bacteria is reduced. The wastewater treatment apparatus 5 is configured to supply the heat used to heat the microbial sludge by the digested sludge S6 from the existing digestion tank 50.

The sludge heat exchanger 510 is provided for heat exchanging the digested sludge S6 digested in the digestion tank 50 to produce a high temperature heating medium (H3) for heating the microbial sludge. The heating medium (H3) for heating the microbial sludge may be the wastewater from the ammonium oxidation tank 100 or may be the water to be supplied from other than the ammonium oxidation tank 100. As the water to be supplied, for example, the treated water W8 treated by the wastewater treatment apparatus 5, other industrial water, or water such as tap water can be used by appropriately adjusting the pH, the salt concentration or the like. The sludge heat exchanger 510 may be, for example, any one of the double pipe heat exchanger, the spiral plate heat exchanger, and the liquid film heat exchanger.

As shown in FIG. 10, the wastewater treatment apparatus 5 is provided with the heating tank 120 for heating the microbial sludge withdrawn from the ammonium oxidation tank 100. The heating tank 120 is provided to be connected with the sludge heat exchanger 510 through the pipe for the heating medium, to receive supply of the heating medium H3 carrying the waste heat retained by the digested sludge 6. The wastewater treatment performed in the wastewater treatment apparatus 5 (wastewater treatment method according to the fifth embodiment) is to heat the microbial sludge withdrawn from the ammonium oxidation tank 100 by using the heat supplied from the existing digestion tank 50, and to return the microbial sludge, in which the activity of the nitrite oxidizing bacteria is reduced by the heat treatment, to the ammonium oxidation tank 100, so that the ammonium nitrogen contained in the wastewater is oxidized to the nitrite nitrogen.

As shown in FIG. 10, the wastewater treatment apparatus 5 may be provided with the transfer path L10 for transferring the microbial sludge from the ammonium oxidation tank 100 to the heating tank 120, and the return path L20 for returning the heated microbial sludge from the heating tank 120 to the ammonium oxidation tank 100. The heating tank 120 for heating the microbial sludge is preferably the aquarium-type heating tank (see FIGS. 2 and 3) for heating the wastewater containing the microbial sludge. Other configurations are the same as those of the wastewater treatment apparatus 1 described above.

For example, the microbial sludge withdrawn together with the wastewater from the ammonium oxidation tank 100 is introduced into the aquarium-type heating tank 120 through the transfer path L10 formed by the pipe, hose or the like. In addition, the heat used for the heat treatment is supplied to the heating tank 120 through the sludge heat exchanger 510 by the digested sludge S6 having generated heat by the digestion reaction. Then, the microbial sludge in which the activity of the nitrite oxidizing bacteria is reduced by the heat treatment is returned to the ammonium oxidation tank 100 through the return path L20 formed by the pipe, hose or the like, so that the nitrite-type nitrification can be stably continued.

According to the wastewater treatment apparatus 5 and the wastewater treatment method described above, since the heat used to heat the microbial sludge is supplied from the existing digestion tank 50, it is not necessary to newly add the heating device for the heat treatment to the wastewater treatment facility. That is, it is possible to use the existing digestion tank as the heat source for the heat treatment, thereby reducing the construction cost of the facility, the installation cost of the attached equipment, the maintenance cost and the like. Further, since the heat used to heat the microbial sludge is supplied by the digested sludge S6, the energy efficiency is improved by using the waste heat. That is, it is not necessary to newly provide the heat source only for the heat treatment, and the activity of the nitrite oxidizing bacteria is reduced by the heat treatment excellent in the energy efficiency so that the nitrite-type nitrification is properly maintained, and thus it is possible to stably perform the denitrification process by the anaerobic ammonium oxidation method at low cost.

Although the embodiments of the present invention have been described above, the present invention is not limited thereto, but may be variously modified within the scope without departing from the spirit of the present invention. For example, the present invention is not necessarily limited to one including all the components included in the above embodiment. A part of components of an embodiment may be replaced with components of another embodiment, a part of components of an embodiment may be added to another embodiment, or a part of components of an embodiment may be omitted.

For example, in the wastewater treatment apparatus 1, 2, 3, 4, 5, the ammonium oxidation tank 100 and the anaerobic ammonium oxidation reaction tank 110 are incorporated in the wastewater treatment system including the biological reaction tank 20. However, as long as there is the ammonium oxidation tank 100 for performing the nitrite-type nitrification by the microbial sludge, structure and the number of other treatment tanks in the wastewater treatment apparatus are not particularly limited. The digestion tank 50 may be provided for digesting the waste sludge transferred from another treatment tank or the like, instead of the concentrated sludge S5 produced in the wastewater treatment system.

Further, in the wastewater treatment apparatus 2, 4, the exhaust gas, steam or hot water (heating medium H2) is discharged from the generator 210 to be used to heat the microbial sludge, and then is supplied to the exhaust heat exchanger 220. However, the wastewater treatment apparatus 2, 4 may be configured such that the exhaust gas, steam or hot water (heating medium H2) is discharged from the generator 210 to be supplied to the exhaust heat exchanger 220, and is used to heat the digestion tank 50 and then heat the microbial sludge.

Further, the wastewater treatment apparatus 3 is provided with the boiler 80 in addition to the first heat exchange tank 310 and the second heat exchange tank 320. However, the wastewater treatment apparatus 3 may be configured such that the heat for the heat treatment is supplied from an appropriate heat source instead of the boiler 80, for example, by including the generator 210 using the digestion gas G1 as the fuel and the exhaust heat exchanger 220 for heating the digestion tank 50 by the heat exchange with the waste heat of the generator 210. Further, the wastewater treatment apparatus 3 may be configured such that the heat for the heat treatment is supplied from the digestion tank 50 by including the sludge heat exchanger 510 instead of the boiler 80.

Further, the wastewater treatment apparatus 4 is configured such that the exhaust heat exchanger 410 is provided on a pipe, which is for the heating medium and connects the boiler 80 and a heating medium outlet of the second heat exchange tank 320, so that the exhaust heat exchanger 410 further heat the heating medium (H1) which has been heated by the second heat exchange tank 320. However, the exhaust heat exchanger 410 may be configured to be provided on a pipe, which is for the heating medium and connects a heating medium outlet of the first heat exchange tank 310 and a heating medium inlet of the second heat exchange tank 320, in order to heat the heating medium (H1) which has released heat in the first heat exchange tank 310 and is before heated by the second heat exchange tank 320. The wastewater treatment apparatus 4 may be provided with the heating tank 120 instead of the first heat exchange tank 310 and the second heat exchange tank 320.

Further, the wastewater treatment apparatus 5 is configured recover the heat from the digested sludge S6 digested in the digestion tank 50. However, the wastewater treatment apparatus 5 may be configured to recover the heat from the concentrated sludge S5, S8 digested in the digestion tank 50.

Further, in the wastewater treatment apparatus 1, 2, 3, 4, 5, design of the path of the heat exchange and the type of the heating medium carrying the heat used to heat the microbial sludge are not particularly limited. The type of the heating medium and the path of the heat exchange may be appropriately changed as long as the function is not disturbed.

In this specification, a description of a method or a method step shall be understood also as a description of means for implementing the respective method or step thereof, and vice versa. Features shall be deemed combinable with each other also if their combination is not expressly mentioned, to the extent that the combination is technically feasible. Features described in a certain combination, context, embodiment, claim or figure shall be understood as usable also in another combination, context, embodiment, claim or figure, to the extent that this is feasible.

### [Reference Signs List]

- 1, 2, 3, 4, 5:: wastewater treatment apparatus
- 10:: first settling basin
- 20:: biological reaction tank
- 30:: final settling basin
- 40:: concentration tank
- 50:: digestion tank
- 60:: dehydrator
- 70:: gas holder
- 80:: boiler (heat source)
- 100:: ammonium oxidation tank
- 110:: anaerobic ammonium oxidation reaction tank
- 120:: heating tank
- 130:: heat exchanger
- 210:: generator (heat source)
- 220:: exhaust heat exchanger
- 310:: first heat exchange tank
- 320:: second heat exchange tank
- 410:: exhaust heat exchanger
- 510:: sludge heat exchanger

## Claims

1. A wastewater treatment apparatus comprising:
an ammonium oxidation tank in which ammonium nitrogen contained in wastewater is oxidized by microbial sludge or microorganism; and
a heating tank in which the microbial sludge or microorganism withdrawn from the ammonium oxidation tank is subjected to heat treatment, wherein
heat used for the heat treatment is supplied from a digestion tank in which waste sludge is digested by anaerobic microorganisms or from a heat source for heating the waste sludge to be digested in the digestion tank, and the microbial sludge or microorganism subjected to the heat treatment is returned to the ammonium oxidation tank.

2. The wastewater treatment apparatus according to claim 1 wherein the microbial sludge or microorganism is in a state entrapped and immobilized on a carrier, in a state attached and immobilized on the carrier, in a state of fixed biofilm on the carrier, or in a state in which granules are formed by self granulation.

3. The wastewater treatment apparatus according to claim 1 wherein the microbial sludge or microorganism is in a state of floating in water.

4. The wastewater treatment apparatus according to claim 1, wherein
the heat source is a boiler using digestion gas as a fuel, and
the heat used for the heat treatment is supplied from the boiler.

5. The wastewater treatment apparatus according to claim 1, wherein
the heat source is a generator using digestion gas as a fuel, and
the heat used for the heat treatment is supplied from the generator.

6. The wastewater treatment apparatus according to claim 1, wherein
the heat source is a boiler using digestion gas as a fuel and a generator using digestion gas as a fuel, and
the heat used for the heat treatment is supplied from the boiler and the generator.

7. The wastewater treatment apparatus according to claim 1 wherein the heat used for the heat treatment is supplied from the digestion tank by digested sludge.

8. A wastewater treatment apparatus comprising:
an ammonium oxidation tank in which ammonium nitrogen contained in wastewater is oxidized by microbial sludge or microorganism;
a first heat exchange tank in which the microbial sludge or microorganism withdrawn from the ammonium oxidation tank is subjected to heat treatment by heat exchange with a heating medium; and
a second heat exchange tank in which the heating medium having released heat by the heat exchange is heated by heat exchange with the microbial sludge or microorganism subjected to the heat treatment, wherein
the microbial sludge or microorganism subjected to the heat treatment is returned to the ammonium oxidation tank.

9. The wastewater treatment apparatus according to claim 8 wherein the heating medium is wastewater from the ammonium oxidation tank or water to be supplied.

10. The wastewater treatment apparatus according to claim 8 wherein heat used for the heat treatment is supplied from a digestion tank in which waste sludge is digested by anaerobic microorganisms or from a heat source for heating the waste sludge to be digested in the digestion tank.

11. A wastewater treatment method using a wastewater treatment apparatus comprising an ammonium oxidation tank in which ammonium nitrogen contained in wastewater is oxidized by microbial sludge or microorganism, wherein
the microbial sludge or microorganism withdrawn from the ammonium oxidation tank is subjected to heat treatment by using heat supplied from a digestion tank in which waste sludge is digested by anaerobic microorganisms or from a heat source for heating the waste sludge to be digested in the digestion tank,
the microbial sludge or microorganism subjected to the heat treatment is returned to the ammonium oxidation tank, and
the ammonium nitrogen contained in the wastewater is oxidized to nitrite nitrogen.

12. A wastewater treatment method using a wastewater treatment apparatus comprising an ammonium oxidation tank in which ammonium nitrogen contained in wastewater is oxidized by microbial sludge or microorganism, wherein
the microbial sludge or microorganism withdrawn from the ammonium oxidation tank is subjected to heat treatment by heat exchange with a heating medium,
the heating medium having released heat by the heat exchange is heated by heat exchange with the microbial sludge or microorganism subjected to the heat treatment, to be reused for the heat treatment of the microbial sludge or microorganism withdrawn from the ammonium oxidation tank,
the microbial sludge or microorganism subjected to the heat treatment is returned to the ammonium oxidation tank, and
the ammonium nitrogen contained in the wastewater is oxidized to nitrite nitrogen.

13. The wastewater treatment method according to claim 12, wherein
the heating medium is the wastewater from the ammonium oxidation tank or water to be supplied, and
the microbial sludge or microorganism is subjected to heat treatment by direct contact with the heating medium adjusted to pH 10 or more.

14. The wastewater treatment method according to claim 12, wherein
the heating medium is the wastewater from the ammonium oxidation tank or water to be supplied, and
the microbial sludge or microorganism is subjected to heat treatment by direct contact with the heating medium adjusted to a salt concentration of 4% or more.
